# EUROPEAN PATENT SPECIFICATION

(11) **EP 0 494 624 B1**
(45) Date of publication and mention of the grant of the patent: **24.03.1999**
(21) Application number: 92100124.4
(22) Date of filing: 03.01.1992
(51) Int. Cl.: H04N 7/087

(54) **Method and receiver for teletext transmission**
Verfahren und Empfänger für Teletextübertragungen
Procédé et récepteur de transmissions de télétexte

(30) Priority: 07.01.1991 IT TO910005
(43) Date of publication of application: 15.07.1992
(73) Proprietor: EDICO S.r.l., I-00197 Roma (IT)
(72) Inventor: Dini, Roberto, I-10098 Rivoli (TO) (IT)
(74) Representative: Eisenführ, Speiser & Partner

(56) References cited:
- EP-A- 0 264 565
- EP-A- 0 468 447
- RUNDFUNKTECHNISCHE MITTEILUNGEN vol. 31, no. 2, 30 April 1987, NORDERSTEDT DE pages 83 - 93 VON GERHARD EITZ ET AL 'TOP - Ein Verfahren zur vereinfachten Anwahl von Fernsehtext-Tafeln durch den Zuschauer'

## Description

The present invention relates to a receiver of teletext transmissions, under the form of a plurality of pages, inserted in the television signal, and divided into groups, for each of which an index page is available, comprising means for receiving and demodulating a television signal, furthermore decoding means for detecting the associated teletext signal and selection means for selecting a chosen page from those transmitted, and memory means for memorising at least one of the chosen teletext pages.

Receivers of teletext transmissions having the above mentioned characteristics are known.

The most recent of such receivers, those according to the TOP system (Table Of Pages, note the European patent application 0 264 565 or "Rundfunktechnische Mitteilungen", vol. 31, no. 2, 30 April 1987, Gerhard Eitz et al., "TOP-Ein Verfahren zur vereinfachten Anwahl von Fernsehtext-Tafeln durch den Zuschauer" for example) present numerous improvements for aiding the user to refer to the teletext, an operation famous for not being very user friendly for various reasons.

However also in such modern receivers, the Italian user that is consulting a Televideo page (a name in which RAI refers to teletext), for example belonging to the group "football", that being page N° 229, in order to return to the "football" index i.e. to page N°201, must depress three keys in succession 2, 0, 1; it is supposed that the user remembers the index number; otherwise it is necessary to return to the general index (100); from this point to the sports index (200) and finally to the Football group index (201).

The invention is based on the knowledge of the above inconvenience that represents a drawback in the actual teletext system.

The object of the invention is to allow the user to display the index page to which the chosen page belongs without a waiting interval.

This object is solved by the features of method claim 1 and apparatus claim 6.

Embodiments of the method according to claim 1 and the receiver according to claim 6 are included in the dependent claims.

The invention will be disclosed in greater detail in the drawings, wherein:
Figure 1 schematically represents part of the electrical circuit of a receiver of teletext transmissions;
Figure 2 schematically represents in greater detail a part of the circuit of the receiver of figure 1.

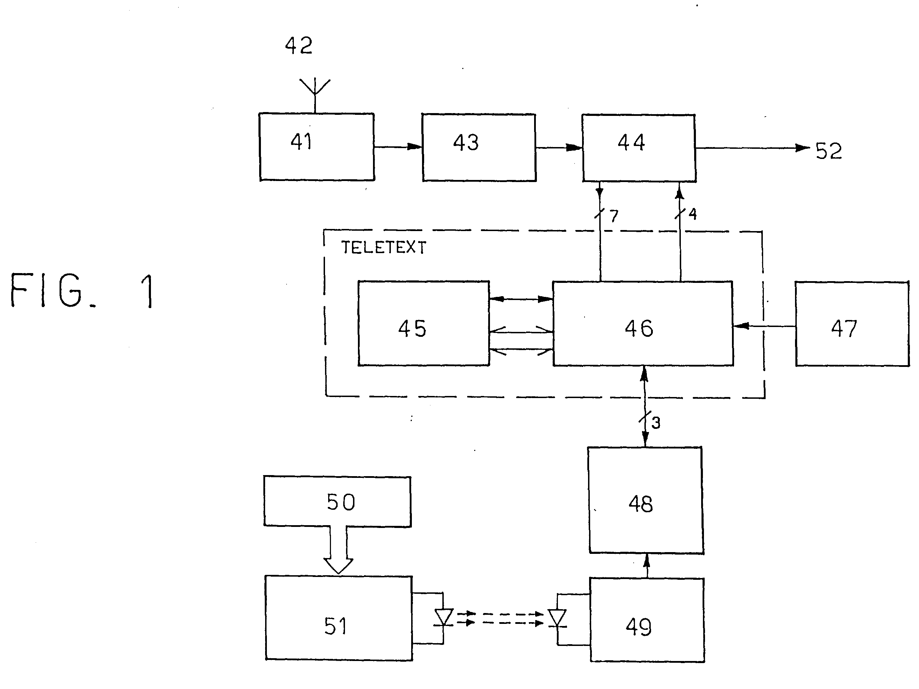

In figure 1 the reference number 42 indicates a receiving antenna, connected to a television receiver for intercepting the transmissions of television signals, contained in the teletext signals. Said antenna is also connected to a conventional tuner, indicated with the reference number 41, to said tuner a signal amplifier of intermediate frequency signals follows, also of the convention type, indicated with the number 43. The amplifier 43 supplies in its output a compound video signal and is connected to an amplifying circuit and video signal elaborator indicated with the reference number 44: the circuit elaborator 44 can be of the type VCU 2133 for example by the company ITT, which also carries out the analogical-digital conversion and the digital-analogical re-conversion of the signal: three signals (RGB (red, green, blue) for the image display device (colour television screen, non represented in the drawings) are available at the output (reference number 52) of the circuit 44.

The elaborator circuit 44 is connected, by means of two multicord connectors, to a teletext signal decoder circuit, indicated with the reference number 46; such circuit 46 can be of the type TPU 2732, by the company ITT, or an equivalent circuit of another manufacturer.

The decoder circuit 46 comprises:
- a data acquisition unit, that receives the digital input of the video signal, coming from the circuit 44;
- a RAM memory that has the role of a buffer of the teletext page to be viewed;
- a control unit of the external memory of eight pages 45;
- a character generator and a control circuit of the visualization;
- a timing unit, that receives the clock signal from the clock generator circuit, indicated with the reference number 47, that can be of the MCU 2632 type, by the company ITT;
- an interface for the bus coming from the central control unit 48.

The acquisition of the teletext data commences in line 7 of the picture tube and terminates in line 22; the teletext information is tuned and identified; a comparator, chooses the pages whose numbers have been required by the control unit 48 and it loads them into the internal memory used as a buffer.

The visualisation begins on line 48 and terminates on line 286, the decoder selects one of the eight memorised pages for visualisation; the 8 bit words (characters) are transformed into a 6x10 point matrix by the character generator and are visualised in 24 lines of 40 characters each.

Circuit 46 receives the commands of the unit 48 through an appropriate bus.

The external memory of 64 Kbit is arranged in 8 sectors of 8 Kbit each; each sector memorises a page and arranges it in 25 lines of 40 bytes each, plus a line of 24 bytes; lines 0-23 represent the 24 lines of the teletext page to be visualised; line 25 of every sector is used for the control information of the relative sector, while the lines 24 of the zero sector and one contain information respective to the general control information and rolling header.

The central control unit, indicated with the reference number 48, can be of the CCU 2030 type produced by the company ITT, or another logic control circuit comprising a suitable microcompressor and suitable operative instruction program.

Said central control unit, apart from circuit 46, is connected to a circuit amplifier, indicated with the reference number 49, that operates as an infra-red signal receiver, coming from a remote control device, indicated with the reference number 51; this is also connected to a command key board, indicated with the reference number 50. The compounds provided by the user, by means of the keyboard 50, through the transmitter 51 and the receiver 49, come from the control unit 48, that provides to decode said data and to supply the suitable control signals to the circuit 46.

In receivers of the TOP system, the table of pages is acquired at the beginning of the teletext reception, that is a special teletext page containing the page numbers of all the pages effectively transmitted; in this table labels are are applied to the group index pages (with the characters "/"), as can be seen from figure 1, enclosed with cited European patent application, that represents said table; the receivers are generally composed of four dedicated keys, with the use of which it is immediately possible to select, as they are memorised by the decoder, appropriately instructed, in the memory 45, the following page, the previous page, the successive group index page and the successive block index page.

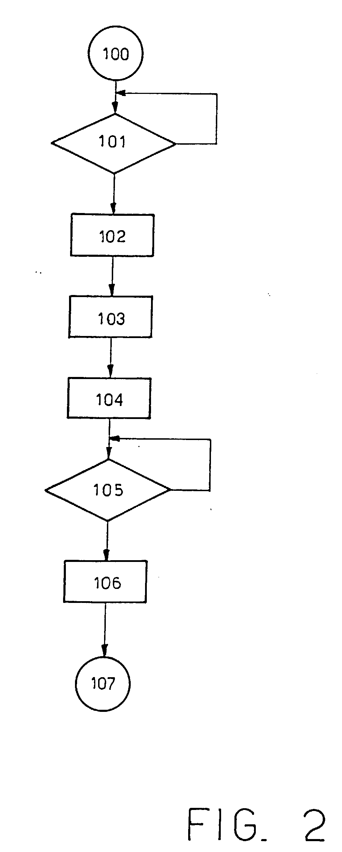

With the use of such keys, in the example stated previously, the user could easily reach the group index page successive to that of the "football" group, i.e. page (230) group index "Other sport", or page (300) block index "Economy and finance", being successive of the block "Sport". But would not be able to reach with such ease page (201) group index ("Football") to which the page being consulted 229 belongs. Figure 2 schematically represents a part of the logic circuit of the central control unit 48, in a realisation according to the invention.

Such a circuit can be realised indifferently with a system of cabled logic or with a system of programmed logic, i.e. utilising a microprocessor; said second system is generally less expensive, as normally televisions and video recorders contain one or more microprocessors; the part represented in figure 2 is that typical of the invention. Block 100 is the starting block of the search operation and storage of the page index group to which the selected page belongs.

Block 101 is a control block; it controls whether the key, that will be called "G-" has been depressed on the remote control device 50, corresponding to the search order and storage of the page index of the group belonging to the selected page; in the affirmative case control passes to the successive block 102; in the negative case control returns back to block 101 (in all the control blocks the YES output is in the lower section, whereas the NO output is the lateral output).

Block 102 provides, by means of circuit 46, the page selection (it can be assumed that it corresponds to the 0 sector of the memory), of the memory 45, that contains the table of page numbers; the control then passes to the successive block 103.

It is to be taken into consideration that the table of page numbers can be obtained by acquiring automatically, upon turning on the receiver, the page that contains it, if the teletext system received conforms to the TOP system; or by creating it, once again automatically, upon turning on the receiver, memorising in due course all the numbers of the pages transmitted in the cycle, if the teletext system received does not conform to the TOP system

Block 103 provides for the finding of, within the table, the number of the page actually selected (in the example, page 229) and, backwardly examining the table, so as to identify the first number characterised with the character "/", i.e. the previous group index (in the case of the example given, this will correspond to page 201); such page number (201) is memorised in an appropriate internal memory of the command unit 48; control then passes to the successive block 104.

Block 104 provides to order the circuit 46 to acquire and memorise in a free sector (N) of the memory 45, page (201) containing said group index; control then passes to the successive block 105.

Block 105 is a control block; it controls whether the acquisition and storage of the page index (201) has been successfully completed; in the affirmative case control passes to block 106; whereas in the negative control passes back to block 105.

Block 106 provides to order the circuit 46 to select the appropriate sector (N) of the memory (45), to read the contents of the page index (201) required and, if necessary, to display it on the receiver's screen; control then passes to the successive block 107.

Block 107 is the terminal block of the end of operations; control can then pass to the starting block 100 or to another suitable operative block of the control circuit.

In the circuit described in figure 2 it is supposed that the search and storage operation of the page index be carried out following a specific command given by the user, corresponding to the key "G-" of the remote control unit 50. However another possibility does exist, that is that the control unit 48 is predisposed so as to carry out said automatic operation as soon as page 229 has been selected by the user, directly or indirectly.

In this way, while the user is consulting page 229, the control unit identifies, acquires and memorises the index page 201, so as that at the moment in which the user, depressing the "G-" key, has the desire to consult the page index, it can be immediately displayed, as is has already been memorised.

The key that has been called "G-" for acquiring the index page can be added to the existing four normally available in receivers according to the TOP system; or could even be, if desired, one of the four, by renouncing a less important function, such as the one for selecting the next block index; in fact the block indexes are normally contained in the general index (page 100), that is easily selected in all decoders. The characteristics of the described receiver of teletext transmissions result in being clear from the effected description and annexed drawings.

From the effected description the advantages of the receiver of teletext transmissions object of the present description also result in being clear.

In particular they consist in the fact that it is possible, by depressing an appropriate key, to visualise the index group to which the page being consulted belongs.

It is clear that the described receiver of teletext transmissions is far more flexible than those of the type known; it is also clear that numerous variants are possible by the skilled man, to the receiver of teletext transmissions described as an example, without however departing from the novelty principles inherent in the invention.

## Claims

1. Method for receiving teletext transmissions in the form of a plurality of pages inserted in the television singal and divided and into groups, for each of which a group index page (201) is available and for immediately displaying upon user's request the group index page (201) to which a chosen page (229) belongs, said displaying being obtained by:
- storing in a memory a table of all the teletext page numbers transmitted in a cycle;
- searching in said memorized table for identifying the number of said group index page (201) to which a chosen page (229) belongs;
- acquiring said group index page (201) whose number has been identified;
- memorizing said acquired group index page (201);
- said searching, acquiring and memorizing being performed while the chosen page (229) is displayed.

2. Method according to claim 1,
characterized in that said step of searching said index page to which the chosen page (229) belongs is obtained by backwardly examining said memorized table until the next group index page (201) is found.

3. Method according to claim 1 or 2,
characterized in that said search, acquisition and storage steps are automatically activated from its central control unit (48) when said chosen page (229) is selected.

4. Method according to one of the claims 1 to 3,
characterized in that said table of all the teletext page numbers which is transmitted as a special page in the teletext transmissions, is selected and memorized.

5. Method according to one of the claims 1 to 3,
characterized in that said table of all the teletext pages is automatically created upon the act of turning on a receiver which receives the teletext transmissions.

6. Receiver for teletext transmissions in a form of a plurality of pages inserted in the television signal and divided into groups for each of which a group index page (201) is available and with means (G) for immediately displaying upon user's request the group index page (201) to which a chosen page (229) belongs, said means for displaying said group index page (201), comprising:
- means (102, 103, 104) for storing in a memory a table of all the teletext page numbers transmitted in a cycle;
- means (102, 103) for searching in said memorized table for identifying the number of said group index page (201) to which a chosen page (229) belongs;
- means (104) for acquiring said group index page (201) whose number has been identified;
- means for memorizing said acquired group index page (201);
- said searching, acquiring and memorizing means being activated while the chosen page (229) is displayed.

7. Receiver according to claim 6,
characterized in that said search, acquisition and storage means (102, 103, 104) are automatically activated from a central control (48) when said chosen page (229) is selected.

8. Receiver according to claim 6 or 7,
characterized by the fact that said means for immediately displaying comprise a manual command organ (G) and means (106) for the selecting and visualising said required index page (201).

## Patentansprüche

1. Verfahren zum Empfangen von Teletext-Übertragungen in der Form einer Vielzahl von Seiten, die in das Fernsehsignal eingefügt sind, und die in Gruppen geteilt sind, wobei für jede eine Gruppenindexseite (201) verfügbar ist, und um unmittelbar auf Anfrage eines Benutzers die Gruppenindexseite (201) anzuzeigen, zu welcher eine gewählte Seite (229) gehört, wobei die Anzeige erreicht wird durch:
- in einem Speicher wird eine Tabelle von allen in einem Zyklus übertragenen Teletextseitennummern gespeichert;
- in der gespeicherten Tabelle wird gesucht, um die Nummer der Gruppenindexseite (201) zu identifizieren, zu welcher eine gewählte Seite (229) gehört;
- die Gruppenindexseite (201), dessen Nummer identifiziert wurde, wird erfaßt;
- die erfaßte Gruppenindexseite (201) wird gespeichert;
- das Suchen, Erfassen und Speichern wird ausgeführt, während die gewählte Seite (229) angezeigt wird.

2. Verfahren nach Anspruch 1,
dadurch gekennzeichnet, daß der Schritt des Suchens der Indexseite, zu welcher die gewählte Seite (229) gehört, erreicht wird, indem rückwärts die gespeicherte Tabelle untersucht wird, bis die nächste Gruppenindexseite (201) gefunden wird.

3. Verfahren nach einem der Ansprüche 1 oder 2,
dadurch gekennzeichnet, daß die Such-, Erfassen- und Speicher-Schritte automatisch von ihrer zentralen Steuereinheit (48) aktiviert werden, wenn die gewählte Seite (229) ausgewählt wird.

4. Verfahren nach einem der Ansprüche 1 bis 3,
dadurch gekennzeichnet, daß die Tabelle aller der Teletextseitenzahlen, die als eine spezielle Seite in den Teletextübertragungen übertragen wird, ausgewählt und gespeichert wird.

5. Verfahren nach einem der Ansprüche 1 bis 3,
dadurch gekennzeichnet, daß die Tabelle von all den Teletextseiten automatisch nach dem Akt des Anschaltens eines Empfängers, welcher die Teletextübertragungen empfängt, erzeugt wird.

6. Empfänger für Teletextübertragungen in der Form einer Vielzahl von Seiten, die in ein Fernsehsignal eingefügt sind, und die in Gruppen unterteilt sind, wobei für jede eine Gruppenindexseite (201) verfügbar ist, und mit Mitteln G zum unmittelbaren Anzeigen der Gruppenindexseite (201), zu welcher eine gewählte Seite (229) gehört, auf Anfrage des Benutzers, wobei die Mittel zum Anzeigen der Gruppenindexseite (201) enthalten:
- Mittel (102, 103, 104) zum Speichern einer Tabelle von allen Teletextseitennummern, die in einem Zyklus übertragen wurden, in einem Speicher;
- Mittel (102, 103) zum Suchen in der gespeicherten Tabelle, um die Nummer der Gruppenindexseite (201), zu welcher eine gewählte Seite (229) gehört, zu identifizieren;
- Mittel (104) zum Erfassen der Gruppenindexseite (201), dessen Nummer identifiziert wurde;
- Mittel zum Speichern der erhaltenen Gruppenindexseite (201);
- wobei die Such-, Erfassen- und Speicher-Mittel aktiviert werden, während die gewählte Seite (229) angezeigt wird.

7. Empfänger nach Anspruch 6,
dadurch gekennzeichnet, daß die Such-, Erfassen- und Speicher-Mittel (102, 103, 104) automatisch von einer zentralen Steuerung (48) aktiviert werden, wenn die gewählte Seite (229) ausgewählt wird.

8. Empfänger nach einem der Ansprüche 6 oder 7,
gekennzeichnet durch die Tatsache, daß die Mittel zum unmittelbaren Anzeigen ein manuelles Kommando-Organ (G) und Mittel (106)zum Auswählen und Visualisieren der benötigten Indexseite (201) aufweisen.

## Revendications

1. Procédé pour recevoir des transmissions de télétexte se présentant sous la forme d'une pluralité de pages insérées dans le signal de télévision et divisées en groupes, pour chacun desquels une page d'index de groupe (201) est disponible et pour afficher immédiatement, sur demande de l'utilisateur, la page d'index de groupe (201) à laquelle appartient une page choisie (229), ledit affichage étant obtenu en :
- enregistrant dans une mémoire une table de tous les numéros de page de télétexte transmis en un cycle ;
- recherchant dans ladite table mémorisée afin d'identifier le numéro de ladite page d'index de groupe (201) à laquelle appartient une page choisie (229) ;
- obtenant ladite page d'index de groupe (201) dont le numéro a été identifié ;
- mémorisant ladite page d'index de groupe (201) obtenue ;
lesdites recherche, obtention et mémorisation étant réalisées tandis que la page choisie (229) est affichée.

2. Procédé selon la revendication 1, caractérisé en ce que ladite étape de recherche de ladite page d'index à laquelle appartient la page choisie (229) est obtenue en examinant rétroactivement ladite table mémorisée jusqu'à ce la page d'index de groupe suivante (201) ait été trouvée.

3. Procédé selon la revendication 1 ou 2, caractérisé en ce que les étapes de recherche, obtention et enregistrement sont activées automatiquement depuis son unité centrale (48) lorsque ladite page choisie (229) est sélectionnée.

4. Procédé selon l'une quelconque des revendications 1 à 3, caractérisé en ce que ladite table de tous les numéros de page de télétexte, qui est transmise en tant que page spéciale lors des transmissions de télétexte, est sélectionnée et mémorisée.

5. Procédé selon l'une quelconque des revendications 1 à 3, caractérisé en ce que ladite table de toutes les pages de télétexte est automatiquement créée suite à l'activation d'un récepteur qui reçoit les transmissions de télétexte.

6. Récepteur pour les transmissions de télétexte se présentant sous la forme d'une pluralité de pages insérées dans le signal de télévision et divisées en groupes pour chacun desquels une page d'index de groupe (201) est disponible, et présentant des moyens (G) pour afficher immédiatement, sur demande de l'utilisateur, la page d'index de groupe (201) à laquelle appartient une page choisie (229), et des moyens pour afficher ladite page d'index de groupe (201), comprenant :
- des moyens (102, 103, 104) pour enregistrer dans une mémoire une table de tous les numéros de page de télétexte transmis en un cycle ;
- des moyens (102, 103) permettant de chercher dans ladite table mémorisée afin d'identifier le numéro de ladite page d'index de groupe (201) à laquelle appartient une page choisie (229) ;
- des moyens (104) pour obtenir ladite page d'index de groupe (201) dont le numéro a été identifié ;
- des moyens pour mémoriser ladite page d'index de groupe obtenue (201);
- lesdites recherche, obtention et mémorisation étant réalisées tandis que ladite page choisie (229) est affichée.

7. Récepteur selon la revendication 6, caractérisé en ce que lesdits moyens de recherche, obtention et enregistrement (102, 103, 104) sont automatiquement activés depuis une commande centrale (48) lorsque ladite page choisie (229) est sélectionnée.

8. Récepteur selon la revendication 6 ou 7, caractérisé par le fait que lesdits moyens d'affichage immédiat comprennent un organe de commande manuelle (G) et des moyens (106) pour sélectionner et visualiser ladite page d'index demandée (201).
